# EUROPEAN PATENT APPLICATION

(11) **EP 4 318 841 A2**
(43) Date of publication of application: **07.02.2024**
(21) Application number: 23180967.4
(22) Date of filing: 22.06.2023
(51) Int. Cl.: H02J 1/00, H02J 1/10, H02M 1/00, H02M 3/158

(54) **POWER SUPPLY SYSTEM**

(30) Priority: 02.08.2022 CN 202210920669; 28.04.2023 CN 202310484478
(71) Applicant: Delta Electronics, Inc., Taoyuan City 33370 (TW)
(72) Inventor: Lu, Ting-Yun, 32063 Taoyuan City (TW); Lin, Cheng-Yi, 32063 Taoyuan City (TW)
(74) Representative: Uexküll & Stolberg

(57) **Abstract**

A power supply system (1) is provided. The power supply system (1) includes a power supply (11), a main load unit (12), a DC-DC voltage conversion unit (13), a bypass unit (14), and at least one sub-load unit (15). The power supply (11) is configured to provide an adjustable supply voltage. The main load unit (12) is electrically connected to the power supply (11) for receiving the supply voltage. The DC-DC voltage conversion unit (13) is electrically connected to the power supply (11). The bypass unit (14) is electrically connected to the power supply (11). The at least one sub-load unit (15) is electrically connected to the DC-DC voltage conversion unit (13) and the bypass unit (14). When the main load unit (12) stops operating, the power supply (11) adjusts the supply voltage and provides the adjusted supply voltage to the sub-load unit (15) through the bypass unit (14).

## Description

### FIELD OF THE INVENTION

The present disclosure relates to a power supply system, and more particularly to a power supply system capable of improving the work efficiency.

### BACKGROUND OF THE INVENTION

Conventionally, the voltage outputted by the power supply is constant and equals the highest required voltage in the system. Then, the DC-DC voltage converter in the system converts the voltage from the power supply and provides the converted voltage to the part with lower required voltage of the system. Under this architecture, when the part with high required voltage of the system stops operating (e.g., enters the sleep mode), the power supply still supplies the power with high required voltage. Therefore, the voltage difference between two ends of the DC-DC voltage converter in the system is still maintained at a high value, resulting in bad conversion efficiency.

Therefore, there is a need of providing a power supply system in order to overcome the drawbacks of the conventional technologies.

### SUMMARY OF THE INVENTION

The present disclosure provides a power supply system including a power supply that adjusts a supply voltage thereof according to the required voltage of the operational load unit. Accordingly, when the main load unit with high required voltage stops operating, the voltage conversion is prevented from being performed under large voltage difference. Therefore, the work efficiency of the whole system is improved through enhancing the conversion efficiency, and meanwhile the effect of saving energy is achieved. In addition, when the main load unit stops operating, the adjusted supply voltage may be provided to the sub-load unit through the bypass unit, thereby improving the efficiency of supplying power.

In accordance with an aspect of the present disclosure, a power supply system is provided. The power supply system includes a power supply, a main load unit, a DC-DC voltage conversion unit, a bypass unit, and at least one sub-load unit. The power supply is configured to provide an adjustable supply voltage. The main load unit is electrically connected to the power supply for receiving the supply voltage. The DC-DC voltage conversion unit is electrically connected to the power supply. The bypass unit is electrically connected to the power supply. The at least one sub-load unit is electrically connected to the DC-DC voltage conversion unit and the bypass unit. When the main load unit stops operating, the power supply adjusts the supply voltage and provides the adjusted supply voltage to the sub-load unit through the bypass unit.

In accordance with another aspect of the present disclosure, a power supply system is provided. The power supply system includes a power supply and a power receiving system. The power supply is configured to provide an adjustable supply voltage. The power receiving system is electrically connected to the power supply through a port for receiving the supply voltage and includes a main load unit, a DC-DC voltage conversion unit, a bypass unit, and at least one sub-load unit. The main load unit is electrically connected to the power supply for receiving the supply voltage. The DC-DC voltage conversion unit is electrically connected to the power supply. The bypass unit is electrically connected to the power supply. The at least one sub-load unit is electrically connected to the DC-DC voltage conversion unit and the bypass unit. When the main load unit stops operating, the power supply adjusts the supply voltage and provides the adjusted supply voltage to the sub-load unit through the bypass unit.

### BRIEF DESCRIPTION OF THE DRAWINGS

FIG. 1 is a schematic block diagram illustrating a power supply system according to a first embodiment of the present disclosure;
FIG. 2 is a schematic block diagram illustrating a power supply system according to a second embodiment of the present disclosure;
FIG. 3 is a schematic block diagram illustrating a power supply system according to a third embodiment of the present disclosure; and
FIG. 4 is schematic flow chart illustrating a control method of a power supply system according to an embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

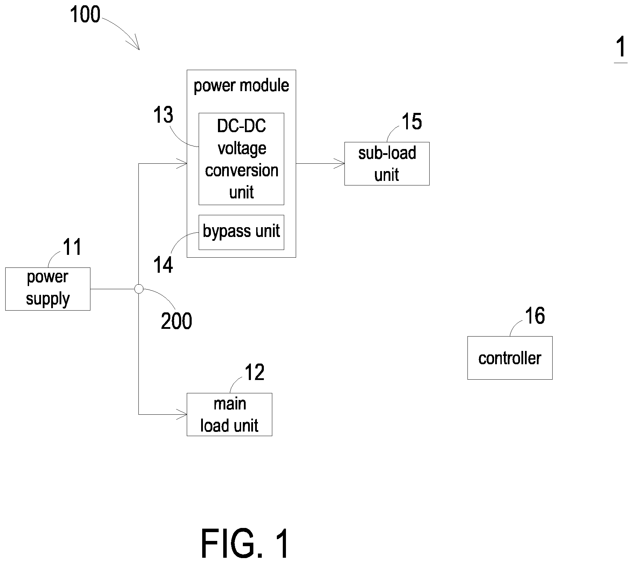

FIG. 1 is a schematic block diagram illustrating a power supply system according to a first embodiment of the present disclosure. As shown in FIG. 1, the power supply system 1 includes a power supply 11, a main load unit 12, a DC-DC voltage conversion unit 13, a bypass unit 14, and at least one sub-load unit 15. The power supply 11 is configured to provide an adjustable supply voltage. The main load unit 12 is electrically connected to the power supply 11 to receive the supply voltage, and the main load unit 12 is for example but not limited to a motor. The DC-DC voltage conversion unit 13 and the bypass unit 14 are electrically connected to the power supply 11 respectively and form a power module collaboratively. The DC-DC voltage conversion unit 13 is configured to convert the received voltage. The bypass unit 14 is configured to transmit the voltage without converting the received voltage. The sub-load unit 15 is electrically connected to the DC-DC voltage conversion unit 13 and the bypass unit 14. For example, the sub-load unit 15 may include a microprocessor, a central processing unit, a universal serial bus, or a liquid crystal panel, but not limited thereto. In an embodiment, the required voltage of the main load unit 12 during operation is greater than the required voltage of the sub-load unit 15 during operation.

When the main load unit 12 operates normally at an operating voltage, the supply voltage provided by the power supply 11 is equal to the required voltage of the main load unit 12. The main load unit 12 receives the supply voltage from the power supply 11 directly, and the supply voltage is converted by the DC-DC voltage conversion unit 13 and then provided to the sub-load unit 15.

When the main load unit 12 stops operating (e.g., enters the sleep mode), the power supply 11 adjusts the supply voltage to be equal to the required voltage of the sub-load unit 15, and the power supply 11 provides the adjusted supply voltage to the sub-load unit 15 through the bypass unit 14.

Consequently, the power supply 11 adjusts the supply voltage according to the required voltage of the operational load unit (i.e., the load unit which is operating). Accordingly, when the main load unit 12 with high required voltage stops operating, the voltage conversion is prevented from being performed under large voltage difference. Therefore, the work efficiency of the whole system is improved through enhancing the conversion efficiency, and meanwhile the effect of saving energy is achieved. In addition, when the main load unit 12 stops operating, the adjusted supply voltage may be provided to the sub-load unit 15 through the bypass unit 14, thereby improving the efficiency of supplying power.

In an embodiment, the power supply system 1 further includes a controller 16 which is in communication with the power supply 11, the main load unit 12 and the sub-load unit 15. The controller 16 may include a microprocessor of the sub-load unit 15 and/or a central processor of the power supply system 1, but not limited thereto. The controller 16 is configured for enabling the power supply 11 to adjust the supply voltage according to the required voltage of the operational load unit. The adjustment for the supply voltage may be realized by the controller 16 and the power supply 11 through the PD (Power Delivery) protocol or other protocol. For example, in the embodiment shown in FIG. 1, when the main load unit 12 stops operating, the controller 16 provides the power supply 11 with a signal reflecting the required voltage of the sub-load unit 15. The power supply 11 adjusts the supply voltage according to the required voltage of the sub-load unit 15, and provides the adjusted supply voltage to the sub-load unit 15 through the bypass unit 14. Further, the specific manner of the controller 16 recognizing whether the main load unit 12 is operating is not limited. For example, the controller 16 may determine whether the main load unit 12 is operating according to the output current of the power supply 11 or the control command received, but not limited thereto.

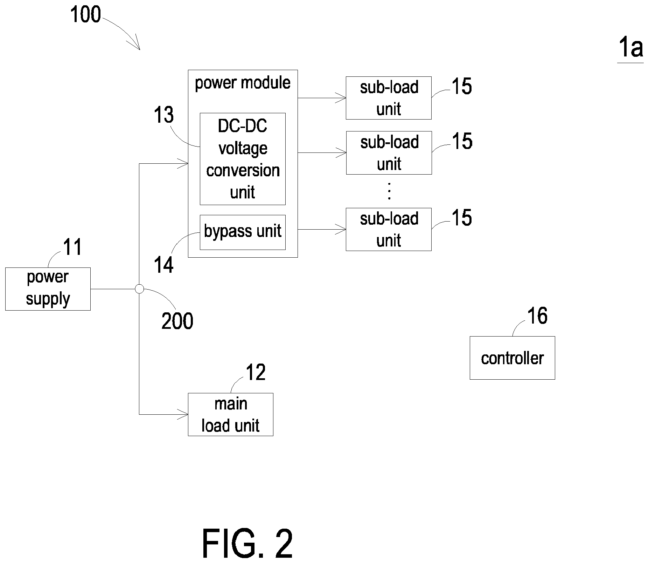

In the embodiment shown in FIG. 1, only one sub-load unit 15 is exemplified, but the number of the sub-load units 15 is not limited actually. For example, in the embodiment shown in FIG. 2, the power supply system 1a includes a plurality of sub-load units 15, and each sub-load unit 15 is electrically connected to the DC-DC voltage conversion unit 13 and the bypass unit 14 of the power module. Preferably, all the sub-load units 15 have the same required voltage during operation.

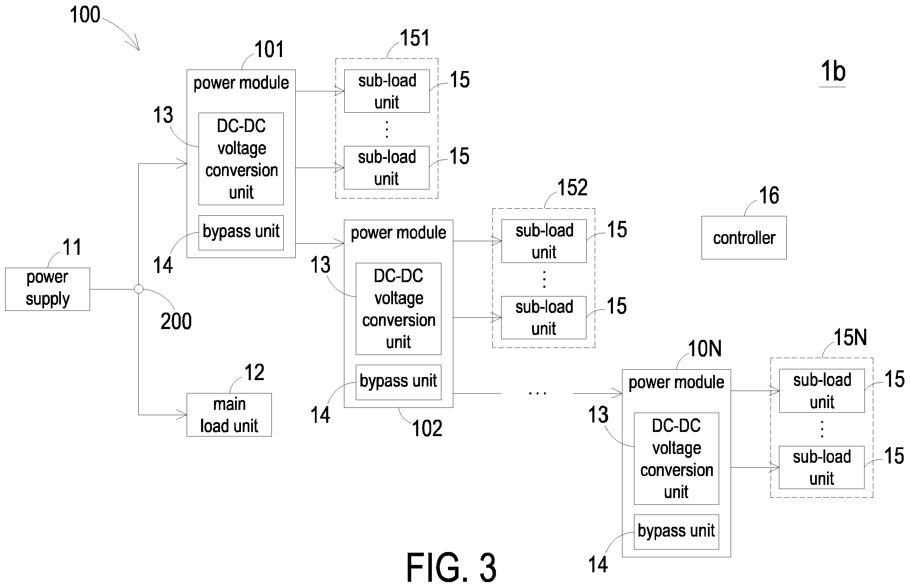

Please refer to FIG. 3. In an embodiment, the power supply system 1b includes N power modules 101, 102, ..., 10N and a plurality of sub-load units 15, and the plurality of sub-load units 15 forms N sub-load unit assemblies 151, 152, ..., 15N, where N is an integer larger than 1. Each power module (101, 102, ..., 10N) includes one DC-DC voltage conversion unit 13 and one bypass unit 14. The first power module 101 is electrically connected to the power supply 11. The first through Nth power modules 101-10N are electrically connected in series sequentially. Each sub-load unit assembly (151, 152, ..., 15N) includes at least one sub-load unit 15. The sub-load unit 15 of the first sub-load unit assembly 151 is electrically connected to the power supply 11 through the first power module 101. The sub-load unit 15 of the (n+1)th sub-load unit assembly 15(n+1) is electrically connected to the power supply 11 through the first to (n+1)th power modules 101-10(n+1), where n is an integer larger than or equal to 1 and smaller than N. Accordingly, the first power module 101 receives the voltage from the power supply 11 directly, and other power module receives the voltage from the correspondingly preceding power module. In an embodiment, during operation, the required voltages of the sub-load units 15 of any sub-load unit assembly are the same, and the required voltage of the sub-load unit 15 of the (n+1)th sub-load unit assembly 15(n+1) is less than the required voltage of the sub-load unit 15 of the nth sub-load unit assembly 15n.

When the main load unit 12 and a part of the sub-load units 15 stop operating (e.g., enters the sleep mode), the controller 16 provides the power supply 11 with a signal reflecting the required voltages of the other operational sub-load units 15, and the power supply 11 adjusts the supply voltage to be equal to the highest required voltage among the operational sub-load units 15. For example, when n=1 and the main load unit 12 stops operating, the power supply 11 adjusts the supply voltage to be equal to the required voltage of the sub-load unit 15 of the first sub-load unit assembly 151. When n>1 and the main load unit 12 and the sub-load units 15 of the first to (n-1)th sub-load unit assemblies 151-15(n-1) stop operating, the power supply 11 adjusts the supply voltage to be equal to the required voltage of the sub-load unit 15 of the nth sub-load unit assembly 15n. When the main load unit 12 and the sub-load units 15 of the first to (N-1)th sub-load unit assemblies 151-15(N-1) stop operating, the power supply 11 adjusts the supply voltage to be equal to the required voltage of the sub-load unit 15 of the Nth sub-load unit assembly 15N. In an embodiment, the sub-load unit 15 which stops operating (e.g., enters the sleep mode) may receive a voltage less than or equal to its operating voltage.

In addition, it is noted that each sub-load unit assembly includes a plurality of sub-load units 15 as shown in FIG. 3, but not limited thereto actually. The sub-load unit assembly may include only one sub-load unit 15, and the number of the sub-load unit 15 included in every sub-load unit assembly may be different and unrelated.

In each power module, when the voltage received by the power module is equal to the required voltage of the sub-load unit 15 connected to the power module, the voltage received by the power module is provided through the bypass unit of the power module to the sub-load unit 15 connected to the power module. On the contrary, when the voltage received by the power module is not equal to the required voltage of the sub-load unit 15 connected to the power module, the voltage received by the power module is converted by the DC-DC voltage conversion unit of the power module and then provided to the sub-load unit 15 connected to the power module, where the voltage after conversion is equal to the required voltage of the sub-load unit 15 connected to the power module. In addition, under the circumstance that the output side of a power module is connected to both the sub-load unit 15 and another power module, the power module provides the same voltage to the sub-load unit 15 and the said another power module connected therewith.

Taking the power module 101 as an example, under the circumstance that the sub-load unit 15 of the sub-load unit assembly 151 connected to the power module 101 operates normally at an operating voltage, when the main load unit 12 stops operating, the voltage received by the power module 101 is equal to the required voltage of the sub-load unit 15 of the sub-load unit assembly 151 connected to the power module 101. Meanwhile, the voltage received by the power module 101 is provided through the bypass unit 14 of the power module 101 to the sub-load unit 15 of the sub-load unit assembly 151 and the power module 102. On the contrary, when the main load unit 12 operates normally at the operating voltage, the voltage received by the power module 101 is not equal to the required voltage of the sub-load unit 15 of the sub-load unit assembly 151, and the voltage received by the power module 101 is converted by the DC-DC voltage conversion unit 13 of the power module 101 and then provided to the sub-load unit 15 of the sub-load unit assembly 151 and the power module 102, where the voltage after conversion is equal to the required voltage of the sub-load unit 15 of the sub-load unit assembly 151.

Likewise, taking the nth power module 10n as an example, under the circumstance that the sub-load unit 15 of the nth sub-load unit assembly 15n connected to the nth power module 10n operates normally at an operating voltage, when n=1 and the main load unit 12 stops operating, or when n>1 and the main load unit 12 and the sub-load units 15 of the first to (n-1)th sub-load unit assemblies 151-15(n-1) stop operating, the voltage received by the nth power module 10n is equal to the required voltage of the sub-load unit 15 of the nth sub-load unit assembly 15n connected to the nth power module 10n. Meanwhile, the voltage received by the nth power module 10n is provided through the bypass units 14 of the first to nth power module 101-10n to the sub-load unit 15 of the nth sub-load unit assembly 15n and the (n+1)th power module 10(n+1). On the contrary, when n=1 and the main load unit 12 operates normally at the operating voltage, or when n>1 and the main load unit 12 or any of the sub-load units 15 of the first to (n-1)th sub-load unit assemblies 151-15(n-1) operates normally at the operating voltage, the voltage received by the nth power module 10n is not equal to the required voltage of the sub-load unit 15 of the nth sub-load unit assembly 15n. Meanwhile, the voltage received by the nth power module 10n is converted by the DC-DC voltage conversion unit 13 of the nth power module 10n and then provided to the sub-load unit 15 of the nth sub-load unit assembly 15n and the (n+1)th power module 10(n+1), where the voltage after conversion is equal to the required voltage of the sub-load unit 15 of the nth sub-load unit assembly 15n.

In an embodiment, when the main load unit 12 stops operating and the sub-load unit 15 of the sub-load unit assembly 151 connected to the power module 101 operates normally at an operating voltage, the controller 16 provides the power supply 11 with a signal reflecting the required voltage of the sub-load unit 15 of the sub-load unit assembly 151, and the power supply 11 adjusts the supply voltage to be equal to the required voltage of the sub-load unit 15 of the sub-load unit assembly 151. Further, the supply voltage provided by the power supply 11 is provided through the bypass unit 14 of the power module 101 to the sub-load unit assembly 151 and the power module 102. Under this circumstance, the voltages received by the power modules 101 and 102 are both equal to the required voltage of the sub-load unit 15 of the sub-load unit assembly 151. In the case that n>1, when the main load unit 12 and the sub-load units 15 of the sub-load unit assemblies 151-15(n-1) stop operating and the sub-load unit 15 of the sub-load unit assembly 15n connected to the power module 10n operates normally at an operating voltage, the controller 16 provides the power supply 11 with a signal reflecting the required voltage of the sub-load unit 15 of the sub-load unit assembly 15n, and the power supply 11 adjusts the supply voltage to be equal to the required voltage of the sub-load unit 15 of the sub-load unit assembly 15n. Further, the supply voltage provided by the power supply 11 is provided through the bypass units 14 of the power modules 101-10n to the sub-load unit assembly 15n and the power module 10(n+1). Under this circumstance, the voltages received by the power modules 101-10(n+1) are all equal to the required voltage of the sub-load unit 15 of the sub-load unit assembly 15n.

In each embodiment of the present disclosure as shown in FIGS. 1, 2 and 3, all of the main load unit 12, the DC-DC voltage conversion unit(s) 13, the bypass unit(s) 14, the sub-load unit(s) 15 and the controller 16 may form a power receiving system 100 collaboratively. The power receiving system 100 may be electrically connected to the power supply 11 through a single port 200 so as to receive the supply voltage and reflect the required voltage. The port 200 is for example but not limited to a USB (universal serial bus) Type-C port.

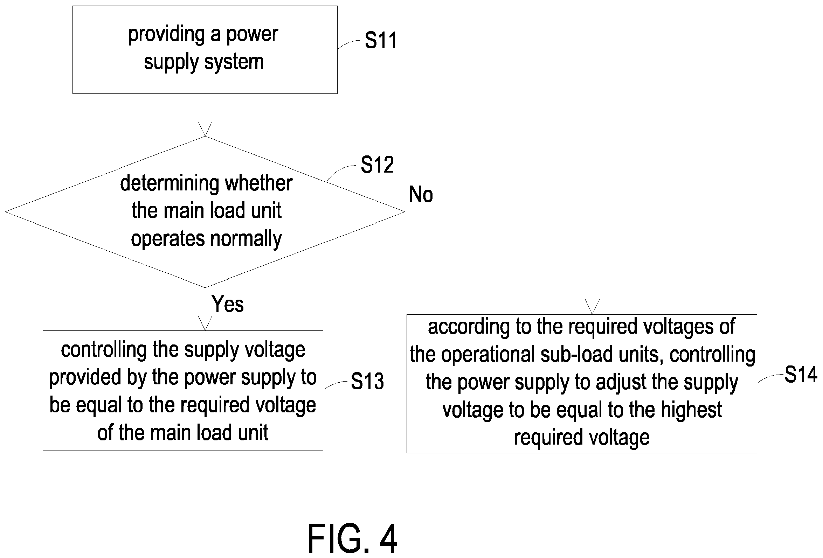

FIG. 4 is a schematic flow chart illustrating a control method of a power supply system according to an embodiment of the present disclosure. The control method is applicable for the power supply system (1, 1a, 1b) in any of the above-mentioned embodiments. As shown in FIG. 4, firstly, in step S11, a power supply system (1, 1a, 1b) is provided. The power supply system (1, 1a, 1b) includes a power supply 11, a main load unit 12, a DC-DC voltage conversion unit 13, a bypass unit 14, and sub-load unit(s) 15. Then, in the step S12, whether the main load unit 12 operates normally is determined. If the determination result is positive (i.e., the main load unit 12 operates normally at an operating voltage), the step S13 is performed to control the supply voltage provided by the power supply 11 to be equal to the required voltage of the main load unit 12. If the determination result is negative (i.e., the main load unit 12 stops operating), the step S14 is performed. In the step S14, according to the required voltages of the operational sub-load units 15, the power supply 11 is controlled to adjust the supply voltage to be equal to the highest required voltage among the operational sub-load units 15.

In summary, the present disclosure provides a power supply system including a power supply that adjusts a supply voltage thereof according to the required voltage of the operational load unit. Accordingly, when the main load unit with high required voltage stops operating, the voltage conversion is prevented from being performed under large voltage difference. Therefore, the work efficiency of the whole system is improved through enhancing the conversion efficiency, and meanwhile the effect of saving energy is achieved. In addition, when the main load unit stops operating, the adjusted supply voltage may be provided to the sub-load unit through the bypass unit, thereby improving the efficiency of supplying power.

## Claims

1. A power supply system (1), **characterized by** comprising:
a power supply (11), configured to provide an adjustable supply voltage;
a main load unit (12), electrically connected to the power supply (11) for receiving the supply voltage;
a DC-DC voltage conversion unit (13), electrically connected to the power supply (11);
a bypass unit (14), electrically connected to the power supply (11); and
at least one sub-load unit (15), electrically connected to the DC-DC voltage conversion unit (13) and the bypass unit (14),
wherein when the main load unit (12) stops operating, the power supply (11) adjusts the supply voltage and provides the adjusted supply voltage to the sub-load unit (15) through the bypass unit (14).

2. The power supply system (1) according to claim 1, further comprising a controller (16), wherein when the main load unit (12) stops operating, the controller (16) provides the power supply (11) with a signal reflecting a required voltage of the sub-load unit (15), the power supply (11) adjusts the supply voltage according to the required voltage.

3. The power supply system (1b) according to claim 1, comprising N power modules (101-10N) and a plurality of said sub-load units (15), wherein N is an integer larger than 1, each of the N power modules (101-10N) comprises one said DC-DC voltage conversion unit (13) and one said bypass unit (14), the first power module (101) is electrically connected to the power supply (11), the first through Nth power modules (101-10N) are electrically connected in series sequentially, the plurality of sub-load units (15) forms N sub-load unit assemblies (151-15N) each comprising at least one sub-load unit (15), the at least one sub-load unit (15) of the first sub-load unit assembly (151) is electrically connected to the power supply (11) through the first power module (101), and the at least one sub-load unit (15) of the (n+1)th sub-load unit assembly (15N) is electrically connected to the power supply (11) through the first to (n+1)th power modules (101-10N), where n is an integer larger than or equal to 1 and smaller than N.

4. The power supply system (1b) according to claim 3, wherein in each of the N power modules (101-10N), when a voltage received by the power module (101) is equal to a required voltage of the sub-load unit (15) connected to the power module (101), the voltage received by the power module (101) is provided through the bypass unit (14) of the power module (101) to the sub-load unit (15) connected to the power module (101).

5. The power supply system (1b) according to claim 3, wherein in each of the N power modules (101-10N), when a voltage received by the power module (101) is not equal to a required voltage of the sub-load unit (15) connected to the power module (101), the voltage received by the power module (101) is converted by the DC-DC voltage conversion unit (13) of the power module (101) and then provided to the sub-load unit (15) connected to the power module (101).

6. The power supply system (1b) according to claim 3, wherein when a voltage received by the nth power module (101) is equal to a required voltage of the sub-load unit (15) of the nth sub-load unit assembly (151) connected to the nth power module (101), the voltage received by the nth power module (101) is provided through the bypass unit (14) of the nth power module (101) to the sub-load unit (15) of the nth sub-load unit assembly (151) and the (n+1)th power module (102).

7. The power supply system (1b) according to claim 3, wherein when a voltage received by the nth power module (101) is not equal to a required voltage of the sub-load unit (15) of the nth sub-load unit assembly (151) connected to the nth power module (101), the voltage received by the nth power module (101) is converted by the DC-DC voltage conversion unit (13) of the nth power module (101) and then provided to the sub-load unit (15) of the nth sub-load unit assembly (151) and the (n+1)th power module (102).

8. The power supply system (1b) according to claim 3, further comprising a controller (16), wherein when the main load unit (12) stops operating, the controller (16) provides the power supply (11) with a signal reflecting required voltages of the plurality of sub-load units (15), the power supply (11) adjusts the supply voltage according to the required voltages of the plurality of sub-load units (15).

9. The power supply system (1b) according to claim 3, further comprising a controller (16), wherein when the main load unit (12) and a part of the sub-load units (15) stop operating, the controller (16) provides the power supply (11) with a signal reflecting required voltages of the other operational sub-load units (15), the power supply (11) adjusts the supply voltage to be equal to a highest one of the required voltages of the other operational sub-load units (15).

10. A power supply system (1), **characterized by** comprising:
a power supply (11), configured to provide an adjustable supply voltage; and
a power receiving system (100), electrically connected to the power supply (11) through a port (200) for receiving the supply voltage, and comprising:
a main load unit (12), electrically connected to the power supply (11) for receiving the supply voltage;
a DC-DC voltage conversion unit (13), electrically connected to the power supply (11);
a bypass unit (14), electrically connected to the power supply (11); and
at least one sub-load unit (15), electrically connected to the DC-DC voltage conversion unit (13) and the bypass unit (14),
wherein when the main load unit (12) stops operating, the power supply (11) adjusts the supply voltage and provides the adjusted supply voltage to the sub-load unit (15) through the bypass unit (14).

11. The power supply system (1) according to claim 10, further comprising a controller (16), wherein when the main load unit (12) stops operating, the controller (16) provides the power supply (11) with a signal reflecting a required voltage of the sub-load unit (15), the power supply (11) adjusts the supply voltage according to the required voltage, and the power supply (11) provides the adjusted supply voltage to the sub-load unit (15) through the bypass unit (14).

12. The power supply system (1b) according to claim 10, wherein the power receiving system (100) comprises N power modules (101-10N) and a plurality of said sub-load units (15), N is an integer larger than 1, each of the N power modules (101-10N) comprises one said DC-DC voltage conversion unit (13) and one said bypass unit (14), the first power module (101) is electrically connected to the power supply (11), the first through Nth power modules (101-10N) are electrically connected in series sequentially, the plurality of sub-load units (15) forms N sub-load unit assemblies (151-15N) each comprising at least one sub-load unit (15), the at least one sub-load unit (15) of the first sub-load unit assembly (151) is electrically connected to the power supply (11) through the first power module (101), and the at least one sub-load unit (15) of the (n+1)th sub-load unit assembly (15N) is electrically connected to the power supply (11) through the first to (n+1)th power modules (101-10N), where n is an integer larger than or equal to 1 and smaller than N.

13. The power supply system (1b) according to claim 12, wherein in each of the N power modules (101-10N), when a voltage received by the power module (101) is equal to a required voltage of the sub-load unit (15) connected to the power module (101), the voltage received by the power module (101) is provided through the bypass unit (14) of the power module (101) to the sub-load unit (15) connected to the power module (101).

14. The power supply system (1b) according to claim 12, wherein in each of the N power modules (101-10N), when a voltage received by the power module (101) is not equal to a required voltage of the sub-load unit (15) connected to the power module (101), the voltage received by the power module (101) is converted by the DC-DC voltage conversion unit (13) of the power module (101) and then provided to the sub-load unit (15) connected to the power module (101).

15. The power supply system (1b) according to claim 12, wherein when a voltage received by the nth power module (101) is equal to a required voltage of the sub-load unit (15) of the nth sub-load unit assembly (151) connected to the nth power module (101), the voltage received by the nth power module (101) is provided through the bypass unit (14) of the nth power module (101) to the sub-load unit (15) of the nth sub-load unit assembly (151) and the (n+1)th power module (102).

16. The power supply system (1b) according to claim 12, wherein when a voltage received by the nth power module (101) is not equal to a required voltage of the sub-load unit (15) of the nth sub-load unit assembly (151) connected to the nth power module (101), the voltage received by the nth power module (101) is converted by the DC-DC voltage conversion unit (13) of the nth power module (101) and then provided to the sub-load unit (15) of the nth sub-load unit assembly (151) and the (n+1)th power module (102).

17. The power supply system (1b) according to claim 12, further comprising a controller (16), wherein when the main load unit (12) stops operating, the controller (16) provides the power supply (11) with a signal reflecting required voltages of the plurality of sub-load units (15), the power supply adjusts the supply voltage according to the required voltages of the plurality of sub-load units (15).

18. The power supply system (1b) according to claim 12, further comprising a controller (16), wherein when the main load unit (12) and a part of the sub-load units (15) stop operating, the controller (16) provides the power supply (11) with a signal reflecting required voltages of the other operational sub-load units (15), the power supply (11) adjusts the supply voltage to be equal to a highest one of the required voltages of the other operational sub-load units (15).
